# EUROPEAN PATENT APPLICATION

(11) **EP 3 726 222 A1**
(43) Date of publication of application: **21.10.2020**
(21) Application number: 18888938.0
(22) Date of filing: 11.12.2018
(51) Int. Cl.: G01N 35/00, B01L 7/00, B01L 3/00

(54) **POLYMERIZATION ENZYME CHAIN-REACTION SYSTEM**

(30) Priority: 11.12.2017 KR 20170168971; 28.11.2018 KR 20180149643
(71) Applicant: Bioneer Corporation, Daejeon 34302 (KR)
(72) Inventor: PARK, Han Oh, Daejeon 34049 (KR); KIM, Jong Kab, Gyeongju-si, Gyeongsangbuk-do 38051 (KR); LEE, Yang Won, Daejeon 34049 (KR); PARK, Sang Ryoung, Daejeon 34048 (KR); JANG, Hye Jin, Daejeon 34934 (KR)
(74) Representative: Algemeen Octrooi- en Merkenbureau B.V.
(86) International application number: PCT/KR2018/015673
(87) International publication number: WO 2019/117584

(57) **Abstract**

The present invention relates to a device which is easy to use and in which real-time reaction product detection through nucleic acid extraction from a biospecimen, a PCR reaction, and scanning of excitation light of various wavelengths and fluorescence corresponding thereto can be automated, and thus various tests can be carried out in a single operation, and in particular, accurate results can be obtained in a short amount of time.

## Description

### [Technical Field]

The present invention relates to a system structure capable of detecting an extraction and amplification reaction of nucleic acids and amplified outputs in real time in a device in which a polymerase chain reaction is implemented.

### [Background Art]

A point-of-care (POC) diagnostic technique capable of accurately and rapidly diagnosing patients' diseases regardless of time and place has come into the spotlight as a very important technique for evidence-based precision medicine. Many studies on the symptom-based POC diagnosis, in which all opportunistic pathogens causing disease symptoms are checked at one time on the basis of the symptoms of a disease (including coughing, diarrhea, hyperpyrexia, genital abnormalities, and the like) to check and confirm the causative pathogens in a short time and prescribe optimal antibiotic and therapeutic agents, as a key new technology for precision medicine in the future are gathering strength and being developed. Such a POC diagnostic technique has an advantage in that rapid and accurate diagnoses are made by the laypersons in the field as in a pregnancy test kit for confirming pre-existing pregnancy, a blood glucose monitoring device for checking a blood sugar level. In recent years, multiple tests capable of checking various pathogens at the same time have been developed as molecular diagnostic technology. Such diagnostic technology is used to determine an exact cause of an infectious disease and give an optimal prescription to the patient in order to treat the disease at an early stage, thereby dramatically shortening the patient's recovery period. Therefore, the diagnostic technology has come into the spotlight as the key technology for future medicine for the purpose of improving healthcare quality and reducing medical care costs.

However, current molecular diagnostic systems take 3 hours or more and require trained technicians to confirm the results. Therefore, it is essential to develop a small automated device capable of fully automatically performing a complicated nucleic acid extraction process and a real-time gene amplification test in order to perform POC molecular diagnostics required in the field, and the automated device should be easily handled by ordinary persons rather than professional personnel.

A representative molecular diagnostic method is a method using a polymerase chain-reaction (hereinafter referred to as "PCR"). Since the polymerase chain reaction (PCR) was invented by Kary Mullis in 1985, it has been widely used in molecular biology, molecular diagnostics, and the like because the PCR may be used to rapidly and easily amplify specific DNA. Because the use of PCR/RT-PCR makes it possible to determine whether there is specific DNA/RNA in a biospecimen, the PCR/RT-PCR has been commonly used to diagnose the infection of pathogenic microbes such as viruses, and the like. This PCR/RT-PCR technology has been developed as real-time quantitative PCR, thereby making it possible to check results as soon as PCR ends. Therefore, because the PCR technology may be applied to significantly reduce a checkup time due to a simplified checkup process and accurately quantify pathogen numbers as well, it has been used as the standard diagnosis method for monitoring a therapeutic effect on HIV, HCV, HBV viruses, and the like. Also, because the PCR technology may be applied to check an expression pattern of a gene associated with a certain disease or a genetic variation, it has been used as the most important technology for diagnosing diseases.

To perform such PCR, a nucleic acid extraction step, which includes removing materials that inhibit a PCR reaction and extracting pure nucleic acids from a biospecimen, is required. Because a nucleic acid extraction process consists of multiple steps and requires skilled technology in handling the biospecimen and nucleic acid extraction, and has problems such as contamination by human error when it is performed manually, molecular diagnostics has been mostly carried out using an automated nucleic acid extraction apparatus.

Because a real-time quantitative PCR device should be installed to perform a PCR reaction and detect a reaction product, molecular diagnostics were previously mainly carried out in big hospitals or specialized clinical trial institutions.

Various automated systems and devices using the same have been developed, which are able to easily use PCR without any specialized skills because recent research and development has been performed to automate all the processes of extracting nucleic acids, performing a PCR reaction and detecting a reaction product.

However, the existing devices have drawbacks in that they are very expensive, take a lot of processing time, and it is difficult to perform various tests at one time.

The basic principle of PCR will be described as follows. When a DNA double helix is heated to 95°C to separate the double-stranded DNA into single strands, and a reaction solution is cooled to an annealing temperature to selectively hybridize primers complementary to both termini of a region to be amplified, which is contained in the PCR reaction solution, DNA polymerases sequentially ligate four nucleotide triphosphates (i.e., A, G, T, and C) complementary to each of the single strands to form double helices. Then, this procedure is repeatedly performed. On an experimental basis, 30 to 45 cycles (n) of repeatedly heating and cooling the PCR reaction solution are performed to exponentially amplifyspecific DNA double helixes to 2ⁿ helices.

The RT-PCR reaction was extended to a method for detecting RNA by synthesizing cDNA by means of a reverse transcription reaction, followed by amplification by PCR.

To fully use PCR for molecular diagnostics, the newly developed principle of real-time quantitative PCR will be described as follows. To quantitatively analyze DNA amplified using a PCR reaction, this method includes adding a substance, which emits fluorescence in proportion to an amount of DNA, to a PCR reaction solution, subsequently measuring the fluorescence for each cycle to find a cycle in which a critical fluorescence value is detected, and quantitatively measuring an initial concentration of a target nucleic acid from the critical fluorescence value.

With the development of various applications after the PCR invention, a number of gene sequences associated with pathogens and diseases have been identified through the genome projects. Also, molecular diagnostics for amplifying such DNA/RNA sequences related to diseases and qualitatively and quantitatively diagnosing the diseases have rapidly advanced. Since the conventional PCR takes around 2 hours to cycle the temperature, methods capable of performing PCR more rapidly and accurately for the POC diagnosis have been continuously developed (Lab Chip, 2016, 16, 3866-3884).

To perform a PCR reaction in a short time, a temperature of a reaction solution should be rapidly changed. To amplify only a desired target using a precise PCR reaction, primers should also be designed to specifically bind to a desired target, and an annealing temperature should be accurately regulated in a PCR temperature cycling reaction.

For this purpose, PCR microreactors have been developed, which have as low thermal capacity as possible and show high heat transfer, compared to the 0.5 mL and 0.2 mL reactors conventionally and commonly used in the laboratories. Because such microreactors use a small amount of a reaction solution and have a wide surface area, heat transfer is performed at a high rate, thereby allowing rapid heating and cooling. They did not show that a high surface area (>100 mm²/10 µL) of a silicon wafer was maintained by putting 10 µL of a PCR solution into a reaction groove having a size of 17 mm x 15 mm and a small depth of 40 to 80 µm and covering the reaction groove with a glass plate, but a cycling time was shortened for one cycle (about 3 minutes) using a conventional Peltier thermal block (Clin. Chem. 40/9, 1815-1818 (1994)).

The initial PCR reaction devices (Turbo Thermalcycler. Bioneer Corp. Daejeon) have been developed, which operated in a manner in which a PCR reactor is repeatedly immersed in a high-temperature water bath and a low-temperature water bath and the PCR reactor is moved back and forth between the high-temperature water bath and the low-temperature water bath so as to rapidly thermally circulate the PCR reactor. In this way, the PCR apparatus configured to circulate the reactor between the zones having different temperatures has an advantage in that the PCR reaction may be carried out rapidly and accurately by immersing the reactor in constant temperature water baths already maintaining a correct temperature in a space-transfer method. However, the PCR apparatus has drawbacks in that it is large, has high maintenance because it requires several constant temperature water baths. Therefore, PCR apparatuses adapting a time-differential temperature cycling method in which the temperature is changed over time using a Peltier element or the like in a fixed block have been mainly used.

PCR methods using a microfluidic channel have been developed as space-transfer temperature cycling methods and time-differential temperature cycling methods. The space-transfer temperature cycling methods may be mainly divided into an open reactor method in which a solution continues to flow out in a first-in-first-out (FIFO) method, and a closed method in which a solution repeatedly moves between different temperature zones.

In 1994, Nakano et al. developed, as the open method, a method in which a PCR solution continues to flow in a cylindrical block having zones with different temperatures after a capillary tube is wound in the cylindrical block (Biosci. Biotech. Biochem., 58(2), 349-352, 1994). This is in the form of a microfluidic channel, and it was confirmed by Kopp et al. in 1998 that the PCR apparatus in a microfluidic channel form in which a PCR solution repeatedly flows through the high-temperature and low-temperature zone performs PCR by allowing 10 µL of the solution to flow for a cycling time of 4.5 seconds for 20 cycles (Science 280 1046-1048, 1998).

### [Disclosure]

### [Technical Problem]

Therefore, the present invention is directed to providing a device that is able to extract nucleic acids from a biospecimen, perform a PCR reaction and scan excited light and the corresponding fluorescence in various wavelength ranges to fully automatically detect a target nucleic acid, is able to test a number of targets in a single operation, is easy to use, and is able to obtain accurate results in a short time.

The present invention is also directed to providing a device capable of performing a rapid and accurate PCR reaction by repeatedly and rapidly applying a temperature required for a thermal denaturation process and an exact temperature required for an annealing process to a reaction target in a temperature regulation process required for a PCR process, thereby maximizing reaction reliability.

### [Technical Solution]

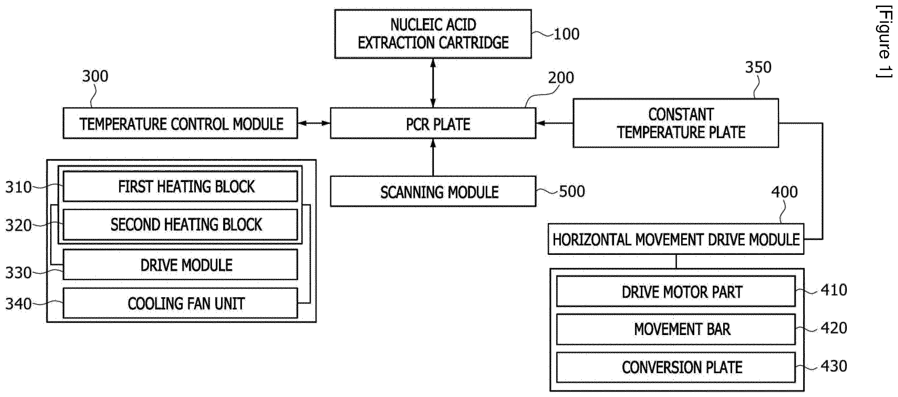

To solve the above problems, according to exemplary embodiments of the present invention, as shown in FIGS. 1 to 23, a polymerase chain-reaction (PCR) system is configured to include a nucleic acid extraction cartridge 100 configured to extract nucleic acids from a biospecimen using a nucleic acid extraction reagent stored therein and form a PCR premixture or a template; a PCR plate 200 coupled in a structure in which the PCR plate 200 is inserted into, and connected via a channel to, the nucleic acid extraction cartridge and configured to receive an extracted nucleic acid solution from the nucleic acid extraction cartridge 100 and inject the nucleic acid solution into at least one or more reaction wells accommodating a primer or a primer/probe set or a dried PCR mixture including the primer/probe set to accommodate the nucleic acid solution therein; and a temperature control module 300 disposed above the PCR plate 200 and including a pair of heating blocks 310 and 320 disposed adjacent to the reaction well Wto apply different temperatures to the reaction well W and allowing rotational motion and vertical movement.

Also, the aforementioned polymerase chain-reaction system may be implemented as a polymerase chain-reaction system including a scanning module 400 disposed under the PCR plate 200 to scan a concentration of a reaction product amplified in the reaction well W.

In this case, in the polymerase chain-reaction system, the temperature control module 300 may be implemented to include a first heating block 310 provided with a first pressurizing surface G1 corresponding to a surface of the reaction well, and maintained at a temperature (hereinafter referred to as a "first temperature") required for thermal denaturation by the heating unit; a second heating block 320, disposed spaced apart from a position corresponding to the first heating block 310, provided with a second pressurizing surface G2 corresponding to a surface of the reaction well, and maintained at a temperature (hereinafter referred to as a "second temperature") required for annealing by the heating unit; and a drive module 330 configured to implement rotational motion or vertical movement of the first heating block 310 and the second heating block 320.

In addition, the polymerase chain-reaction system may be implemented to further include a cooling fan unit 340 configured to control thermal radiation and conduction in a separation space between the first heating block 310 and the second heating block 320.

Moreover, in the polymerase chain-reaction system, the second heating block 320 may be implemented to further include a cooling pattern part 321 embodied at a top portion opposing the second pressurizing surface G2.

Furthermore, in the aforementioned structure of the polymerase chain-reaction system, the first heating block 310 and the second heating block 320 may be implemented as a body part made of a metal material so that the first heating block 310 and the second heating block 320 accommodate a heating unit and a temperature sensor therein to maintain a set temperature at the first temperature or the second temperature.

Also, according to an exemplary embodiment of the present invention, in the polymerase chain-reaction system, the aforementioned drive module 330 may be implemented to include a rotary module including a drive shaft S configured to autonomously rotate the first heating block 310 and the second heating block 320 to shift to either the first pressurizing surface G1 or the second pressurizing surface G2 coming into contact with a surface of the reaction well; and a drive frame 332 configured to implement vertical movement of the first heating block 310 and the second heating block 320 in a direction perpendicular to the drive shaft S and a guide frame 334 disposed in a structure in which the guide frame 334 passes through the drive frame.

In addition, the polymerase chain-reaction system may be implemented to further include a first elastic member 333 disposed in a structure in which the first elastic member 333 is inserted into the drive frame so that the drive frame applies a restoring force in an upward direction when the surface of the reaction well comes into contact with the first heating block 310 or the second heating block 320.

According to an exemplary embodiment of the present invention, the polymerase chain-reaction system may be implemented to further include a second elastic member 335 which is disposed above the first heating block 310 and the second heating block 320 so that the second elastic member 335 is spaced apart from the first heating block 310 and the second heating block 320, and having holes provided at both ends thereof, the holes having a larger diameter than that of the guide frame, allows vertical movement of the drive frame while preventing deviation from the guide frame by means of a pin provided in the guide frame after the holes are inserted into a pair of guide frames 334 and applies a buffering force during the contact of the surface of the reaction well while applying a pressure in a downward direction.

According to an exemplary embodiment of the present invention, the polymerase chain-reaction system may be implemented to further include a constant temperature plate 350 disposed under the PCR plate 200 and to maintain the temperature of the PCR plate 200 at the first temperature and the second temperature.

Also, the constant temperature plate 350 may be configured to include a first zone heated to the first temperature and a second zone spaced apart from the first zone and heated to the second temperature, and further include a horizontal movement drive module 400 configured to horizontally move the constant temperature plate 350 to the bottom of the PCR plate 200.

In this case, the constant temperature plate 350 may be provided with a separation portion Ss configured to partition the first zone and the second zone, and may be implemented in a structure in which the first zone and the second zone are connected at both lateral ends of the separation portion Ss.

Also, the constant temperature plate 350 may be implemented in a structure in which a circuit of a temperature sensor and a heating element is formed on a PCB substrate and the heating element and the temperature sensor are closely attached to metal plates corresponding to the first zone and the second zone, respectively.

Furthermore, the horizontal movement motion of the constant temperature plate 350 may be implemented in a sliding manner, wherein the constant temperature plate 350 moves in a state in which the constant temperature plate 350 comes into contact with a sliding tape coming into contact with a lateral portion of the constant temperature plate 350.

In particular, when the first zone horizontally moves and is disposed under the PCR plate, the first heating block may be operated to rotate to face a top surface of the PCR plate, and when the second zone horizontally moves and is disposed under the PCR plate, the second heating block may be operated to rotate to face a top surface of the PCR plate.

That is, when temperature cycling is performed on the PCR plate 200, in order to increase the temperature of the PCR plate to the first temperature, the first heating block rotates to face a top surface of the PCR plate and a bottom surface of the PCR plate is pressurized while coming into contact with the first heating block as the first heating block moves downwards after the horizontal movement of the first zone of the constant temperature plate, and, in order to decrease the temperature of the PCR plate to the second temperature, the top surface of the PCR plate 200 rotates to face the second heating block, and the bottom surface of the PCR plate 200 is pressurized while coming into contact with the second heating block as the second heating block moves downwards after the horizontal movement of the second zone of the constant temperature plate, so that the top and bottom surfaces of the PCR plate 200 can be heated and cooled at the same time.

Also, the constant temperature plate 350 may be configured to further include a temperature sensor part 351 including temperature sensors T1 and T2 configured to sense a temperature of the constant temperature plate in at least one or more locations; and a control module Cp configured to control a change in the set temperature.

In this case, the polymerase chain-reaction system may include a scanning module 400 disposed under the PCR plate 200 to scan excited light with various wavelength ranges and fluorescence corresponding to the excited light in order to determine a concentration of a reaction product amplified in the reaction well W, and a plurality of light transmission parts H provided in a through hole structure and configured to guide detection light of the scanning module 400 toward the constant temperature plate 350.

### [Advantageous Effects]

According to an exemplary embodiment of the present invention, a device can be provided, which is easy to use and able to detect a reaction product in real time by extracting nucleic acids from a biospecimen, performing a PCR reaction and scanning excited light with various wavelength ranges and fluorescence corresponding to the excited light, thus performing various tests in a single operation, and particularly obtaining accurate results in a short time.

According to an exemplary embodiment of the present invention, a device can also have an effect of performing an accurate PCR reaction by rapidly applying exact temperatures required for thermal denaturation and annealing steps to a reaction target in real time in a temperature regulation step required for a PCR process, thereby maximizing reaction reliability.

That is, in the case of a conventional temperature control method in which the temperature is raised while moving a reaction solution, because a steady increase in temperature cannot be implemented, this method is disadvantageous for a PCR reaction. Also, because temperature uniformity cannot be simultaneously realized throughout the reaction products in a manner which results in a sequential increase in temperature while moving the reaction solution, a problem regarding a high probability of causing other reactions can be solved. Accordingly, an increase in temperature required for a PCR reaction can be very effectively implemented in a manner in which the temperature is raised by maintaining a temperature range set for the heating block in a constant temperature state and directly applying a pressure to the entire reaction solution.

Also, because the heating block is pressurized in real time while changing a position of the heating block in order to minimize the time delay in a process of changing the temperature from a high temperature to a low temperature, a problem caused by the time delay required for a temperature change process can be dramatically solved.

In addition, because a PCR plate is implemented in a structure in which the PCR plate is inserted into a nucleic acid extraction cartridge, for testing, into a nucleic acid extraction cartridge that is used in common, may a suitable PCR plate among the PCR plates used for various testing kits, which are stored in a small space, be inserted when necessary. The nucleic acid extraction cartridge can be set to analyze up to six fluorescence values in one reaction well provided in the PCR plate, and the number of the reaction wells in the PCR plate can be increased to 8, when necessary. Therefore, because it is possible to amplify and detect all pathogens which are likely to be included in a patient's biospecimen associated with the symptoms, the symptom-based multiple molecular diagnostic tests can be provided.

According to an exemplary embodiment of the present invention, the polymerase chain-reaction system can have an effect of realizing two-fold efficiency compared to the constant temperature plate method in which the PCR plate is maintained at a single temperature by partitioning a constant temperature plate into zones having gradients of the first temperature and second temperature, moving the constant temperature plate using the drive module so that the zone having a set temperature (i. e., a first temperature or a second temperature) corresponding to the temperature of the heating block faces a surface of the PCR plate when the heating block applies pressure and allowing top and bottom surfaces of the PCR plate to contact the heating block and the constant temperature plate and be pressurized, and thus can have an effect of realizing two-fold efficiency compared to the constant temperature plate method in which the PCR plate is maintained at a single temperature.

Further, the polymerase chain-reaction system can have an advantage in that, when a movable structure of the constant temperature plate is implemented, the reliability of configuration and movement of products can be ensured using a sliding tape in a procedure of performing a driving operation, and it takes a method in which the top and bottom surfaces of the plate inserted into the target are heated at the same time, thereby reducing a testing time in half.

### [Description of Drawings]

FIG. 1 is a block diagram showing main parts constituting a polymerase chain-reaction system according to an exemplary embodiment of the present invention.
FIGS. 2 to 7 show diagrams for describing a structure of a temperature control module 300 according to the present invention.
FIG. 8 shows a diagram of one exemplary embodiment of a PCR plate 200 applied to the present invention.
FIGS. 9 to 12 are conceptual diagrams for describing structures and operations of a constant temperature plate and a horizontal movement drive module applied to the present invention.
FIG. 13 is a perspective conceptual diagram of a nucleic acid extraction cartridge of the present invention having a structure to which the PCR plate is inserted and coupled.
FIG. 14 is an exploded perspective view of FIG. 13.
FIG. 15 is a diagram showing an inner structure of a cartridge cover part R1 in the structure shown in FIG. 14.
FIG. 16 is a perspective view showing an assembled state of the structure shown in FIG. 14.
FIGS. 17 to 19 are diagrams showing a lower operation state of the cartridge structure according to the present invention.
FIG. 20 is a diagram showing an entire structure and a layout configuration of a device constituting the polymerase chain-reaction system according to the present invention.
FIG. 21 is an enlarged diagram showing an assembled layout of the main parts of the present invention shown in FIG. 20, and FIG. 22 is a vertical-sectional conceptual view of FIG. 21 presenting a layout of the main parts.
FIG. 23 is a lateral perspective cross-sectional conceptual diagram shown in FIG. 22.

### [Modes of the Invention]

These and other advantages and features of the present invention and method of achieving them will be apparent from the following description of preferred embodiments, with reference to the accompanying drawings. However, the present invention is not limited to the following embodiments and may be embodied in various forms. That is, the exemplary embodiments of the present invention provided herein play a role in making the disclosure of the present invention complete, and are provided to inform a person who has ordinary knowledge and skill in the art to which this invention belongs of the scope of the invention.

The terminology used herein is for the purpose of describing particular embodiments only and is not intended to be limiting of the exemplary embodiments. The singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, components and/or groups thereof, but do not preclude the presence or addition of one or more other features, whole numbers, steps, operations, elements, components and/or groups thereof.

FIG. 1 is a block diagram showing main parts constituting a polymerase chain-reaction system (hereinafter referred to as a "present invention") according to an exemplary embodiment of the present invention.

Referring to FIG. 1, the polymerase chain-reaction system (hereinafter referred to as a "present invention") according to an exemplary embodiment of the present invention is characterized in that it includes a temperature control module which is implemented in a heating block structure coming into contact with a PCR reaction plate to apply a certain temperature to the PCR reaction plate, so that it can perform an accurate PCR reaction by applying a temperature required for a thermal denaturation process and an exact temperature required for an annealing process to a reaction target in real time and in a single operation in a temperature regulation process for a PCR process without any time difference, thereby maximizing reaction reliability.

Such a temperature control module according to the present invention changes positions of the heating blocks set respectively to a first temperature and a second temperature to apply a pressure to a PCR reaction plate in real time in order to minimize a time delay, which is required to implement, as a temperature of the PCR reaction plate, the second temperature that is a relatively low temperature from the first temperature, or vice versa, that is, from the second temperature to the first temperature that is a relatively high temperature. Accordingly, a problem caused by the time delay required for a temperature change process may be dramatically solved.

In addition, in the present invention, the present invention may be implemented to further include a constant temperature plate structure disposed under the PCR plate and serving as a structure horizontally moving in a sliding manner. In this case, the constant temperature plate structure by which the temperature of the PCR plate is maintained at the first temperature or the second temperature may be used to minimize the time required to apply a temperature change condition, thereby maximizing a reaction rate.

Specifically, the present invention may configured to include a nucleic acid extraction cartridge 100 configured to extract nucleic acids from a biospecimen using a nucleic acid extraction reagent as a medium and form a PCR premixture or a template; a PCR plate 200 coupled in a structure in which the PCR plate 200 is inserted into, and connected via a channel to, the nucleic acid extraction cartridge and configured to receive an extracted nucleic acid solution from the nucleic acid extraction cartridge 100 and disperse the nucleic acid solution into at least one or more reaction wells accommodating a primer/probe set or a dried PCR mixture including the primer/probe set to accommodate the nucleic acid solution therein; and a temperature control module 300 disposed above the PCR plate 200 and including a pair of heating blocks 310 and 320 disposed adjacent to the reaction well W to apply different temperatures to the reaction well W.

In particular, the present invention is configured to include a scanning module 400 disposed under the PCR plate 200 to scan a concentration of a reaction product amplified in the reaction well W.

The present invention may have the aforementioned configuration to allow non-experts to input a desired specimen into the nucleic acid extraction cartridge in order to provide convenience to freely extract nucleic acids, and simultaneously perform rapid and exact temperature control using a thin film and a heating block structure capable of pressing the PCR plate to directly apply a target temperature to a reaction solution in the PCR plate in a temperature cycling process required for amplification, which is applied to the PCR plate 200.

Also, a polymerase chain reaction (hereinafter referred to as "PCR") device embodied as one system may be provided to scan excited light with various wavelength ranges and fluorescence corresponding to the excited light by means of a scanning module and detect a reaction product under the PCR plate in real time.

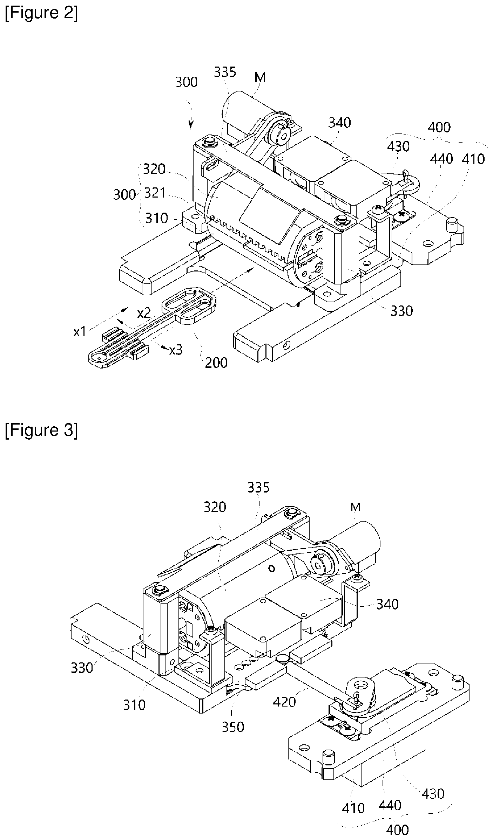

FIGS. 2 to 7 show diagrams for describing a structure of a temperature control module 300 according to the present invention.

FIGS. 2 and 3 are perspective conceptual diagrams showing a temperature control module according to the present invention.

Referring to FIGS. 2 and 3, the temperature control module 300 serves to extract nucleic acids from a biospecimen, mix the nucleic acids with a polymerase to perform constant temperature control on the PCR plate 200 configured to receive a polymerase chain reaction (PCR) premixture or a nucleic acid extract from the nucleic acid extraction cartridge 100 (FIG. 1) to accommodate the nucleic acid solution therein.

Specifically, the temperature control module 300 includes a first heating block 310 provided with a first pressurizing surface G1 corresponding to a surface of the reaction well W embodied in the PCR plate 200 and maintained at a temperature set in a range of temperature (hereinafter referred to as a "first temperature") required for thermal denaturation by the heating unit. At the same time, the temperature control module 300 is configured to include a second heating block 320 disposed spaced apart from a position corresponding to the first heating block 310, provided with a second pressurizing surface G2 corresponding to a surface of the reaction well, and maintained at a temperature set to a range of temperature (hereinafter referred to as a "second temperature") required for annealing by the heating unit. In particular, the structures of the first heating block 310 and the second heating block 320 may be implemented to allow rotational motion and vertical movement.

As shown in FIGS. 2 and 3, the first heating block 310 and the second heating block 320 are disposed in a face-to-face structure to face each other. Overall, a top surface is implemented as a flat surface for the purpose of performing a pressurization function, and a region arranged above the flat structure is provided in a three-dimensional structure having a certain curvature.

The first heating block 310 and the second heating block 320 are disposed to face each other, wherein the opposite surfaces are implemented in a structure in which the surfaces are spaced apart from each other, and may be maintained at different set temperatures, respectively.

For example, the first temperature of the first heating block 310 is a temperature applied to a thermal denaturation step of separating double helix DNA (including DNA extracted from the biospecimen), and may be set to a range of 94 to 96°C. According to a preferred embodiment of the present invention, the first temperature of the first heating block 310 may be maintained at 95°C.

Also, the second temperature of the second heating block 320 is a temperature required for a primer annealing step of annealing primers to the separated template DNA, and may be set to a range of 50 to 65°C. According to a preferred embodiment of the present invention, the second temperature of the second heating block 320 may be maintained at 55°C.

The first heating block 310 and the second heating block 320 are not implemented in a manner in which the first heating block 310 and the second heating block 320 accommodate a water or a heat transfer fluid therein but implemented in a structure having a body of a metal material having high thermal capacity and good heat transfer efficiency, thereby making it possible to maintain the temperature of the PCR plate at set temperatures at all times using a heating unit in each of the first heating block 310 and the second heating block 320. For this purpose, the heating unit should be controlled by temperature control so that a constant temperature is maintained by installing a temperature sensor in each of the first heating block 310 and the second heating block 320.

That is, when a PCR premixture is injected into the PCR plate 200, at a time required for application of the first temperature, the first heating block 310 rotates to become adjacent to a surface of the PCR plate 200. That is, because the first pressurizing surface G1 has a flat-plate structure with a flat structure, the entire surface of the PCR plate 200 is heated at the same temperature and pressure at the same time, thereby making it possible to transfer a uniform temperature to the entire specimen.

Also, at a time required for application of the second temperature required for the annealing step, the PCR plate 200 is moved to a lower part of the second heating block 320 disposed over the PCR plate 200 through the rotational motion, and the entire surface of the PCR plate 200 is heated at the same temperature and same pressure at the same time.

That is, a time for preparing a reaction at a set temperature is not required in a separate way, and the PCR plate 200 is driven by means of simple rotational motion in a manner in which the entire surface of the PCR plate 200 may be heated at the same temperature and same pressure at the same time, thereby inducing a rapid and accurate PCR reaction compared to the conventional method for controlling a set temperature.

Also, because the first heating block 310 and the second heating block 320 are set to different temperature, in consideration of the fact that that the second heating block may be always heated by radiant heat or conductive heat from the first heating block, a cooling fan unit 340 capable of realizing a cooling effect on a separation space between the structures may be provided.

Because it is relatively important for the second heating block 320 to maintain a low second temperature, for example, an annealing temperature of 55°C, a top portion of the second heating block 320 may be provided with a dissipative cooling pattern capable of minimizing the thermal interference of the first heating block 310 and easily dissipating an excessive amount of heat using a cooling fan unit. For example, in the present invention, the second heating block 320 may be implemented to further include a cooling pattern part 321 embodied at a top portion opposing the second pressurizing surface G2. The cooling pattern part 321 has a structure in which a number of protruding patterns are implemented at an upper portion, and thus is advantageous in maintaining a constant low temperature because a contact surface area with air may be expanded to enhance heat dissipation efficiency.

Unlike the method for moving a reaction specimen or moving the reaction specimen from one heating zone to another heating zone using the time settings to implement a PCR reaction, the present invention described above may implement exact transfer of the first temperature and the second temperature by applying the heating block structures to uniformly raise a temperature over the entire surface of the PCR plate while fixing the reaction specimen.

Also, according to an exemplary embodiment of the present invention, the polymerase chain-reaction system may be configured to further include a constant temperature plate 350 engaged with the aforementioned temperature control module.

As shown in FIGS. 2 and 3, the constant temperature plate 350 is disposed under the heating block structures constituting the temperature control module, and may regulate the PCR plate 200 to have the same temperature as the temperature of the first heating block 310 or the second heating block 320 when the first heating block 310 or the second heating block 320 of the temperature control module 300 pressurizes the PCR plate through rotational motion and vertical movement after entrance of the PCR plate.

For this purpose, the constant temperature plate 350 may be configured to further include a horizontal movement drive module 400 configured to horizontally move the constant temperature plate 350 under the PCR plate 200.

As shown in FIGS. 2 and 3, the horizontal movement drive module 400 may configured to include a movement bar 420 coupled to one end of the constant temperature plate 350; a drive motor part 410; and a conversion plate 430 configured to convert a rotational force of the drive motor part 410 into a horizontal movement force of the movement bar 420.

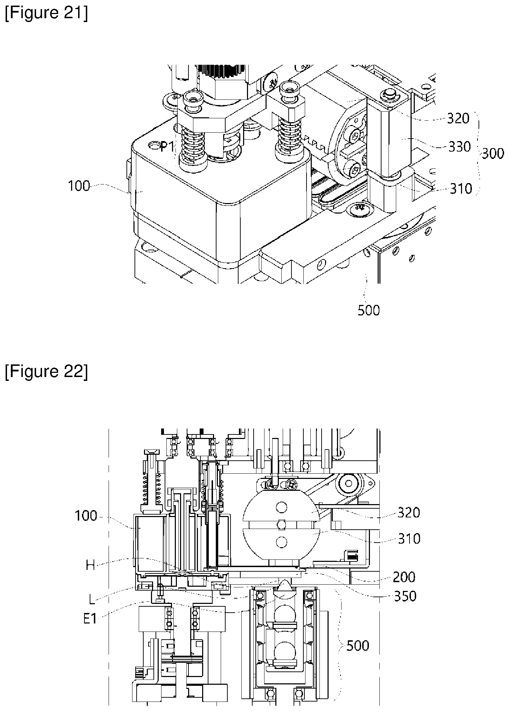

Such a horizontal movement drive module 400 may horizontally move the constant temperature plate 350 under the aforementioned temperature control module 300. In particular, the constant temperature plate 350 according to an exemplary embodiment of the present invention may be implemented in a structure in which the constant temperature plate 350 is partitioned into a first zone heated to the first temperature and a second zone spaced apart from the first zone and heated to the second temperature (see descriptions for FIGS. 21 to 23).

That is, according to an exemplary embodiment of the present invention, two-fold efficiency may be realized, compared to the method for the constant temperature plate in which the PCR plate is maintained at a single temperature, by partitioning a constant temperature plate 350 into zones having gradients of the first temperature and second temperature, horizontally moving the constant temperature plate in a sliding mode using the horizontal movement drive module 400 so that the zone having a set temperature (i. e., a first temperature or a second temperature) corresponding to the temperature of the heating block faces a top surface of the PCR plate through the horizontal movement drive module 400 when the heating block applies pressure, and allowing the top and bottom surfaces of the PCR plate to contact the heating block and the constant temperature plate and be pressurized at the same time.

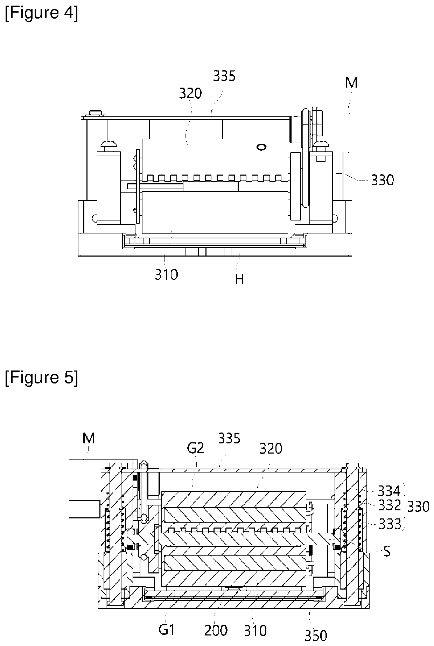

FIGS. 4 and 5 are cross-sectional conceptual views of the temperature control modules shown in FIGS. 2 and 3. Here, FIG. 4 shows a process of lowering the first heating block to come into close contact with a surface of the PCR plate 200 as shown in FIG. 5 to apply a first temperature to the PCR plate 200, after the PCR plate 200 is moved toward the bottom of the first heating block.

As such, the temperature control module 300 of the present invention may be provided with a drive module 330 configured to implement rotational motion or vertical movement of the first heating block 310 and the second heating block 320 in order to automate the operation of such a heating module.

Referring to FIGS. 2 to 5, the drive module includes a rotary module including a drive shaft S configured to autonomously rotate the first heating block 310 and the second heating block 320 to shift to either the first pressurizing surface G1 or the second pressurizing surface G2, both of which come into contact with a surface of the reaction well.

That is, the rotary module functions to autonomously rotate the first heating block 310 and the second heating block 320. That is, as shown in FIGS. 4 and 5, a rotational force is applied from a drive motor M to match the heating block to be contacted with a surface of the PCR plate in order to implement vertical movement of the first heating block 310 and the second heating block 320.

To implement the vertical movement, the drive module 330 may also be configured to include a vertical movement module including a drive frame 332 configured to implement vertical movement of the first heating block 310 and the second heating block 320 in a direction perpendicular to the drive shaft S and a guide frame 334 disposed in a structure in which the guide frame 334 passes through the drive frame.

That is, as shown in FIG. 4, the first heating block 310 and the second heating block 320 are spaced (m) apart from the PCR plate 200. Then, as shown in FIG. 5, the drive frame 332 is moved down along the guide frame 334 so that the first pressurizing surface G1 or the second pressurizing surface G2 of the first heating block 310 or the second heating block 320 can come into contact with a surface of the PCR plate.

As described above, according to the present invention, the temperature control module 300 has an advantage in that the first temperature and the second temperature may be directly applied to the entire surface of the PCR plate for the entire PCR targets in the PCR plate 200, and may have superior effects in terms of application rate and reaction efficiency.

Also, the structure of the heating block of the temperature control module 300 is a structure in which the heating block is disposed above the PCR plate to enable rotation at any time and moves down only when the heating block is to be pressed against the PCR plate. The inventive system may be configured to include a first elastic member 333 disposed in a structure in which the first elastic member 333 is inserted into the drive frame and having a restoring force for causing the heating block to move upwards at any time when the heating block is not pressed against the PCR plate.

Also, the inventive system includes a second elastic member 335 to which, when the heating block comes into contact with the PCR plate 200 and applies a pressure to the PCR plate 200, the pressurizing force is transferred so that the heating block is prevented from applying an excessive amount of pressure to the PCR plate 200.

The second elastic member 335 may be disposed above the first heating block 310 and the second heating block 320 so that the second elastic member 335 is spaced apart from the first heating block 310 and the second heating block 320, and may have holes provided at both ends thereof, the holes having a larger diameter higher than that of the guide frame, allows vertical movement of the drive frame while preventing deviation from the guide frame by means of a pin provided in the guide frame after a pair of guide frames 334 are inserted into the holes, and by slightly bending when a pressure is applied in a downward direction and pushes the middle of the second elastic member 335, may enable a constant pressure to be applied.

Furthermore, according to the illustrated exemplary embodiment, the second elastic member 335 may be implemented in a leaf spring structure to exert a constant buffering force and perform control so that an excessive amount of pressure is prevented from being applied to a surface of the PCR plate when the first and second heating blocks are pressurized in a downward direction.

In the case of the temperature control module 300 of the present invention, the second elastic member 335 is disposed above the first heating block 310 and the second heating block 320 so that the second elastic member 335 is spaced apart from the first heating block 310 and the second heating block 320.

Also, in the system structure of the present invention, the PCR plate 200 is provided in the form of a plate-type structure in which a reaction well is provided in a top surface of the PCR plate 200. In this case, the system may be configured to further include a structure of the constant temperature plate 350 provided under the PCR plate 200 in order to maintain a constant temperature, for example, a range of second temperature (for example, 55°C).

This is because the amplification efficiency in the PCR plate 200 is much better only if the PCR plate 200 quickly reaches a target temperature when the first heating block having a first temperature (for example, 95°C) is brought into close contact with the PCR plate 200 to raise the temperature using the temperature control module 300 of the present invention or when the second heating block having a second temperature (for example, 55°C) is brought into close contact with the PCR plate 200.

Therefore, according to an exemplary embodiment of the present invention, it is desirable that the present invention may be configured to further include a constant temperature plate 350 disposed under the PCR plate 200 to maintain a temperature of the PCR plate 200 at the second temperature.

In particular, although it may be desirable to have a structure of the constant temperature plate 350 implemented in a mode in which it is installed in a fixed type and a constant set temperature is applied thereto, it is more desirable when the constant temperature plate 350 is implemented in a structure in which the constant temperature plate itself is compartmentalized into zones for applying the first temperature and the second temperature and allowed to horizontally move.

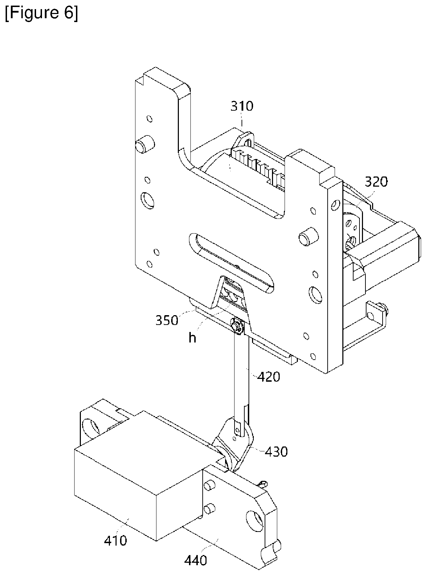

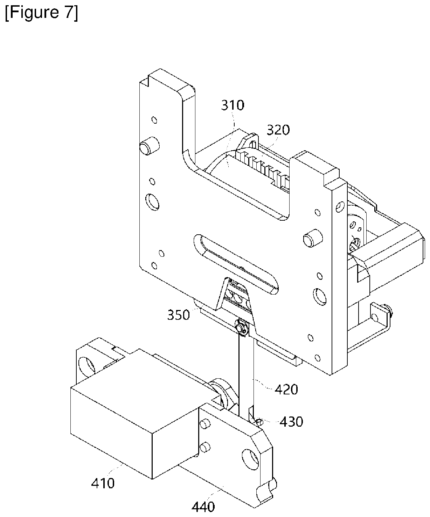

FIG. 6 is a diagram showing that the constant temperature plate 350 in the structure shown in FIG. 2 horizontally moves downwards to the temperature control module and enters the temperature control module by means of the horizontal movement drive module 400, and FIG. 7 is a diagram showing that a temperature zone is changed by horizontally moving the constant temperature plate 350 outwards in the operation shown in FIG. 6. That is, in the structure shown in FIG. 6, as the first heating block applies the first temperature, the first heating block rotates to face a top surface of the PCR plate when the first zone horizontally moves and is disposed under the PCR plate. Then, as shown in FIG. 7, when the second zone horizontally moves and is disposed under the PCR plate, the second heating block is operated to rotate to face the top surface of the PCR plate.

The horizontal movement of the constant temperature plate 350 is implemented in a sliding manner, wherein the constant temperature plate 350 moves while coming into contact with a sliding tape coming into contact with a lateral surface of the constant temperature plate 350.

Referring to FIGS. 6 and 7, which are conceptual diagrams showing a bottom surface of the temperature control module according to the present invention, the constant temperature plate 350 may be disposed between the PCR plate 200 and a scanning module (not shown: reference numeral 500 in FIG. 1) provided under the constant temperature plate 350, as shown. In this case, a plurality of light transmission parts H configured to guide light from the scanning module 500 may be provided in a through hole structure so that the excited light irradiated from the scanning module may be irradiated to reach the PCR plate 200 and fluorescence may be detected.

Therefore, in the present invention, a nucleic acid extraction process, a PCR process and a detection process may be implemented in one system serving as an integrated system installed with the aforementioned scanner. Also, a separable PCR plate structure may be implemented to be applicable to the diagnosis of various diseases.

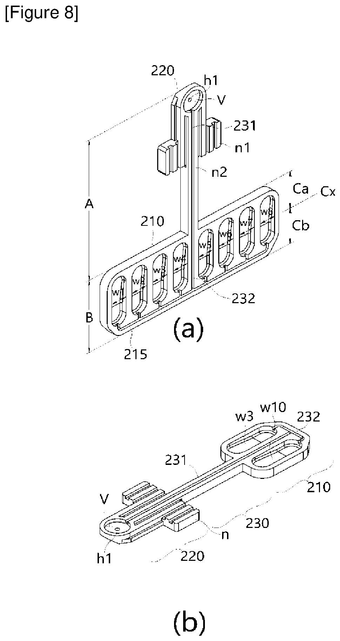

FIG. 8 shows one exemplary embodiment of the PCR plate 200 applied to the present invention.

Referring to FIG. 8 and the conceptual diagrams shown in FIGS. 2 and 3 as described above, the PCR plate 200 according to the present invention includes a body part 210 provided with at least one or more reaction wells (W1....Wn) whose plate-shaped surfaces accommodate a dried primer product and a structure which extends from one end of the body part 210 and is inserted into and coupled with the nucleic acid extraction cartridge 100.

In particular, the PCR plate 200 may be implemented in a structure in which the insertion part 220 having an injection hole h1 into which the PCR premixture is injected from the nucleic acid extraction cartridge 100 is implemented. Also, the PCR plate 200 may be implemented in a structure in which the connection part 230 including a channel part 231 provided on a surface of the body part is provided so that the connection part 230 can be connected to the injection hole h1 to be connected to the plurality of reaction wells.

Specifically, as shown in FIG. 8, the PCR plate 200 includes a body part 210 provided with a plurality of reaction wells (W1....Wn). In the case of the reaction wells, in the structure shown herein, the PCR plate 200 is implemented in a structure in which 8 reaction wells are included, but the present invention is not limited thereto. In this case, it is desirable that the PCR plate 200 is implemented in a structure in which at least one or more reaction wells are included. Also, the structure of the reaction wells may be implemented in a concave pattern structure by processing a surface of the body part 210.

In particular, according to a preferred embodiment of the present invention, the PCR plate 200 is provided in a structure in which a barrier pattern 215 configured to partition a certain region of the reaction wells on a surface region of the body part 210 as shown in FIG. 8 is projected, and is implemented so that a primer provided in a dried state in the reaction wells and a polymerase chain reaction (PCR) premixture injected from the nucleic acid extraction cartridge may be dispersed and mixed in the reaction wells.

Also, the PCR plate 200 is configured to include a cover member (not shown) configured to seal the tops of the plurality of reaction wells. In this case, the cover member may be made of a transparent film material showing light transmittance.

When the cover member is brought into close contact with surfaces of the reaction wells to implement the insides of the reaction wells as cavities, later, the polymerase chain reaction (PCR) premixture injected from the nucleic acid extraction cartridge is injected into the reaction wells while pushing out an air layer present in the cavities.

In particular, in the present invention, as shown in the structure of FIG. 8, a channel part 231 connected to the reaction wells in the body part 210 may be provided. The channel part is implemented to extend, from a point where the channel part 231 is connected to the injection hole h1 and across the body part 210, to an end part 232 of the body part, wherein the channel part 231 is implemented to be connected to each of end parts of the plurality of reaction wells in a direction opposite to the insertion part from the end part 232.

That is, as shown in FIG. 2, when the nucleic acid extraction cartridge is injected through the injection hole h1 provided at a lower portion of the insertion part, a channel 231 extending, in a direction x1, from its starting point and across the body part is implemented, and the channel is branched in left and right directions at an end point of the body part so that the channel is connected to an inlet of each of the reaction wells. A reason for forming the channel in this way is that a trace of an air layer is present in a region of the reaction wells sealed with the cover member so that the injected polymerase chain reaction (PCR) premixture fills a lower portion Cb of the body part based on the central line cx of the body part as in the structure shown in FIG. 8 to push up the air layer to an upper portion Ca of the body part.

Therefore, a mixture to be subjected to a PCR reaction is disposed at a relatively lower portion Cb of each of the reaction wells. Since the region where the heating block of the present invention applies pressure and the region where the scanner module performs detection are in the lower portion Cb due to the characteristics of the device as shown in FIG. 8, all the precision of detection, PCR reaction efficiency, and temperature control efficiency may be enhanced.

Also, in the present invention, it is desirable that the PCR plate 200 is formed of a synthetic resin material having high light transmittance. This is, considering the function of the aforementioned scanner module, when the PCR plate 200 is formed of a material having high light transmittance, detection effectiveness can be enhanced.

Various synthetic resin materials such as transparent PP, PE, PPA, PMMA, PC, and the like may be applied as such a material, but the present invention is not necessarily limited thereto. For example, materials that may ensure predetermined light transmittance may be applied.

However, the PCR plate 200 may have a constant temperature maintained by a heat source applied from the constant temperature plate disposed underneath. In this case, a thickness of the body part 210 may be implemented in a range of 1.0 mm to 3.0 mm for the purpose of efficiency in maintaining the temperature of the temperature control module which is directly applied to a polymerase chain reaction (PCR) premixture, a nucleic acid solution and a dried primer/probe set, or a PCR reaction product including the primer/probe set, which is filled in the reaction wells. When the thickness of the body part 210 is less than 1.0 mm, the high-temperature heat used to set the first temperature may be easily transferred to the bottom surface of the body part to cause thermal interference with the constant temperature plate, which makes it difficult to perform temperature control. On the other hand, when the thickness of the body part 210 is greater than 3.0 mm, the temperature control of materials accommodated in the reaction wells may be easy, but the temperature control of the lower constant temperature plate is not easy, which makes it difficult to maintain a constant temperature.

That is, in the present invention, as specifically shown in FIGS. 4 and 5, the first pressurizing surface G1 or the second pressurizing surface G2, which comes into contact with a surface of the reaction well by autonomously rotating the first heating block 310 and the second heating block 320, controls the temperature of the reaction product by settomg a temperature at the first temperature or the second temperature by pressurizing the PCR plate in a structure in which a top surface of the barrier pattern 215 comes into contact with the cover member configured to cover the barrier pattern.

Also, when the PCR plate 200 is subjected to temperature cycling, in the temperature control module according to the structure shown in FIGS. 2 and 3, in order to raise the temperature of the PCR plate 200 to the first temperature, the first heating block rotates to face the top surface of the PCR plate and the bottom surface of the PCR plate is pressurized while coming into contact with the first zone of the constant temperature plate as the first heating block moves downwards after the horizontal movement of the first zone of the constant temperature plate.

Also, in order to decrease the temperature of the PCR plate to the second temperature, the second heating block rotates to face the top surface of the PCR plate 200, and the bottom surface of the PCR plate 200 is pressurized while coming into contact with the second zone of the constant temperature plate as the second heating block moves downwards after the horizontal movement of the second zone of the constant temperature plate, so that the top and bottom surfaces of the PCR plate 200 can be heated and cooled at the same time.

Owing to this operation, two-fold efficiency may be realized, compared to the method for the constant temperature plate in which the PCR plate is maintained at a single temperature, by subjecting the top and bottom surfaces of the PCR plate to contact pressurization at the same time. Therefore, because the present invention takes a method in which the top and bottom surfaces of the plate inserted into the target are heated at the same time, the present invention has an advantage in that a testing time may be reduced in half.

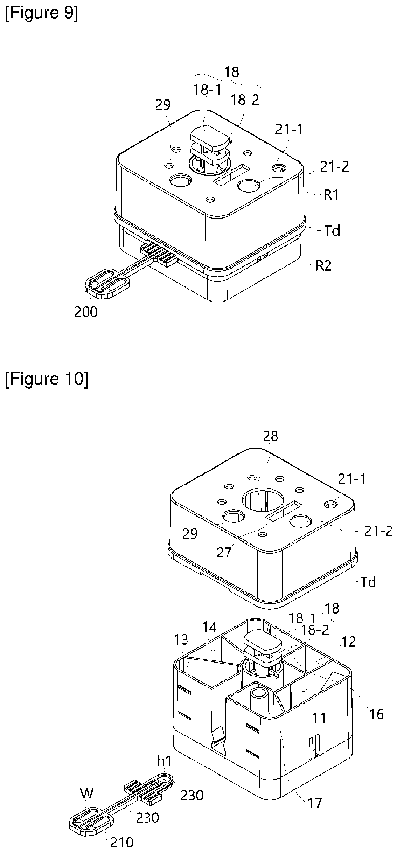

FIGS. 9 to 12 are diagrams for describing structures and operational methods of the constant temperature plate and the horizontal movement drive module in detail.

FIG. 9 shows a structure in which the constant temperature plate 350 is seated as shown in FIGS. 2 and 3, and FIG. 10 shows a structure from which only the constant temperature plate structure is separated.

Referring to FIGS. 9 and 10, the constant temperature plate 350 according to an exemplary embodiment of the present invention is disposed under the heating block structures constituting the temperature control module shown in FIGS. 2 and 3. When the first heating block 310 or the second heating block 320 of the temperature control module 300 is allowed to pressurize the PCR plate from the top through rotational motion and a vertical movement after disposition of the PCR plate 200, the constant temperature plate 350 may function to cause the PCR plate to have the same temperature as the temperature of the first heating block 310 or the second heating block 320.

As shown in FIG. 9, the constant temperature plate 350 is provided with a separation portion Ss configured to partition the first zone a1 in which the first temperature is maintained and the second zone a2 in which the second temperature is maintained, and implemented in a structure in which the first zone a1 and the second zone a2 are connected at both lateral ends a3 and a4 of the separation portion Ss.

Connector structures Ca and Cb may be installed at one end of the constant temperature plate 350 to apply power or transfer a control signal.

In particular, the horizontal movement of the constant temperature plate 350 is implemented in a sliding manner, wherein the constant temperature plate 350 is implemented to move while coming into contact with a sliding tape coming into contact with a lateral portion of the constant temperature plate 350, thereby simplifying the structure and improving mobility.

In this case, a through hole H may be formed in a region of the second zone a2 to allow transmission of detection light from the scanning module 500 configured to scan a concentration of the amplified reaction product.

Temperature sensors Sa and Sb may be disposed in the first zone a1 and the second zone a2 to measure and control a temperature of the corresponding zone and control.

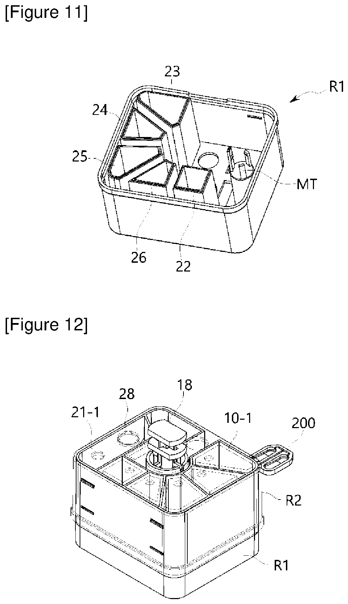

FIG. 11 shows a bottom surface shown in FIG. 10. Here, connector parts Cc and Cd configured to apply a control signal and power may be provided, and the temperature sensors Sa and Sb may be disposed so that the constant temperatures of the first temperature and the second temperature are maintained.

The temperature maintenance of the first zone or the second zone of the constant temperature plate may be performed using a method in which various heating means or various other means such as a hot wire, a heating resistor, and the like are installed in the plate. However, according to a preferred embodiment of the present invention, electrodes and a temperature sensor circuit are provided in an epoxy printed circuit, and an exothermic paint is coated between the electrodes, and metal plates corresponding to the first zone and the second zone may be brought into close contact with their corresponding temperature sensors and exothermic paints, thereby realizing such an effect.

FIG. 12 is a top plan conceptual diagram for describing an operational method described in FIGS. 6 and 7 in further detail.

In the present invention, the present invention may also be configured to further include a horizontal movement drive module 400 configured to horizontally move the constant temperature plate 350 to the bottom portion of the PCR plate 200.

As shown in FIGS. 2 and 3, the horizontal movement drive module 400 may be configured to include a movement bar 420 coupled to one end of the constant temperature plate 350, a drive motor part 410, and a conversion plate 430 configured to convert a rotational force of the drive motor part 410 into a horizontal movement force of the movement bar 420, as described above.

As shown in FIG. 12, the PCR plate 200 is coupled to the nucleic acid extraction cartridge in a structure in which the place 200 is inserted into, and connected via a channel to, the nucleic acid extraction cartridge, and the nucleic acid solution extracted in the nucleic acid extraction cartridge 100 is injected into the injection hole h1, and the extracted/injected nucleic acid solution is subsequently transferred to the PCR plate 200 where the nucleic acid solution is injected into at least one or more reaction wells accommodated with a primer or a primer/probe set or a dried PCR mixture including the primer/probe set and accommodated therein.

Next, the temperature control module of the present invention for applying the first temperature or second temperature rotates to move downward toward the reaction wells of the PCR plate 200.

In this case, the horizontal movement drive module 400 may allow the constant temperature plate 350 to horizontally move toward the bottom of the temperature control module 300. In this case, the PCR plate horizontally moves in a sliding mode by means of the horizontal movement drive module 400 so that the zone having a set temperature (i. e., a first temperature or a second temperature) corresponding to the temperature of the heating block faces the top surface of the PCR plate when the PCR plate is pressurized by means of the heating block.

In this case, when the first zone a1 horizontally moves and is disposed under PCR plate 200, the first heating block 310 (FIG. 2) rotates to face the top surface of the PCR plate, and the heating block subsequently moves down to come into contact with the top surface of the PCR plate.

Also, when the second zone a2 horizontally moves and is disposed under the PCR plate, the second heating block 320 (FIG. 2) rotates to face the top surface of the PCR plate, and the heating block subsequently moves down to come into contact with the top surface of the PCR plate.

For example, when the PCR plate 200 is subjected to temperature cycling, in order to raise the temperature of the PCR plate to the first temperature, the first heating block rotates to face the top surface of the PCR plate, and it is driven so that the bottom surface of the PCR plate is pressurized while coming into contact with the first zone of the constant temperature plate as the first heating block moves downwards after the horizontal movement of the first zone of the constant temperature plate.

Also, in order to decrease the temperature of the PCR plate to the second temperature again, the second heating block rotates to face the top surface of the PCR plate 200, and it is driven so that the bottom surface of the PCR plate 200 is pressurized while coming into contact with the second zone of the constant temperature plate as the second heating block moves downwards after the horizontal movement of the second zone of the constant temperature plate.

As described above, two-fold efficiency is realized, compared to the method for the constant temperature plate in which the PCR plate is maintained at a single temperature, by subjecting the top and bottom surfaces of the PCR plate to contact pressurization at the same time.

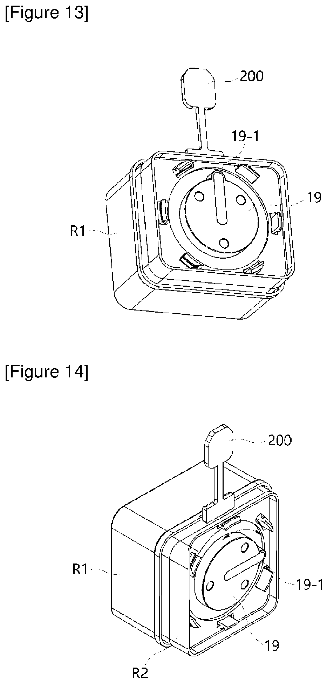

Hereinafter, the nucleic acid extraction cartridge 100, which provides a polymerase chain reaction (PCR) premixture including a nucleic acid extract to the PCR plate according to the present invention as described above, will be described with reference to FIGS. 13 to 19.

FIG. 13 is a perspective conceptual diagram of a nucleic acid extraction cartridge of the present invention, showing a structure to which the PCR plate as described above is inserted and coupled. FIG. 10 is an exploded perspective view of FIG. 9, and FIG. 11 is a diagram showing an inner structure of a cartridge cover part R1 in the structure shown in FIG. 10 (In this exemplary embodiment, a structure having two reaction wells in a gene amplification plate will be described by way of example).

Referring to FIGS. 13 to 15, a nucleic acid extraction cartridge 100 according to the present invention may be configured to include a cartridge cover part R1 provided with a plurality of partitioned accommodation parts 22, 23, 24, 25 and 26 containing a solution required for DNA extraction; and a cartridge body part R2 provided with a reaction accommodation part 11 coupled to the cover part R1 in an insertion structure and configured to allow a solution flowing in from the accommodation parts to react with a specimen and wash the specimen.

In this case, the nucleic acid extraction cartridge 100 is configured to include a piston part 18 configured to inject a PCR premixture, which has been purified in the reaction accommodation part 11, into an injection hole h1 of the PCR plate 200 coupled in a structure in which the PCR plate 200 is inserted into the cartridge body part R2.

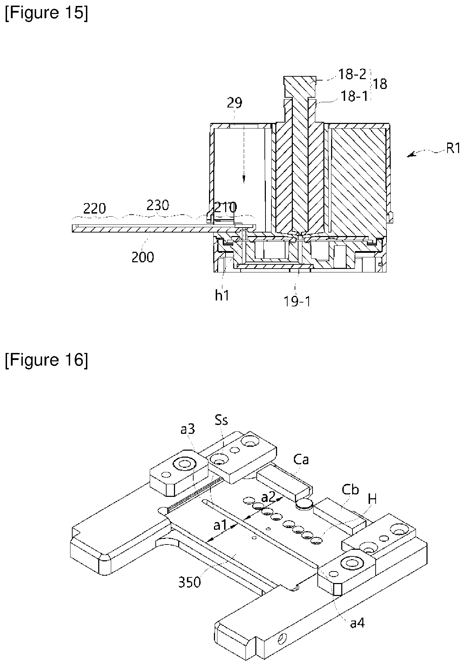

Actions of the nucleic acid extraction cartridge according to the present invention will be described with reference to FIGS. 14, 15 and 17. FIG. 16 is a transparent perspective view showing an inner structure in an assembled state shown in FIG. 13.

In the nucleic acid extraction cartridge of the present invention, because a rotary valve 19 having a channel 19-1 formed therein is installed on a bottom surface of the body part R2, a channel of the rotary valve 19 may be connected to a space of each of accommodation parts 11, 12, 13, 14, 15, 16 and 17 of the cartridge body part R2 by rotating such a rotary valve. The nucleic acid extraction cartridge may be designed to connect the channel to any one of the accommodation parts, subsequently drive the piston part 18 to take a solution included in the accommodation part, and transferring the solution to another accommodation part or the PCR plate 200.

As shown in FIGS. 14 and 15, the nucleic acid extraction cartridge is designed so that the accommodation parts 22, 23, 24, 25 and 26, which contain the solutions required for DNA extraction, respectively, are formed inside the cartridge cover part R1 and a hole is easily made using a penetrating needle (a component of reference numeral 10-1 in FIG. 12) of the body accommodation part because a bottom surface of each of the accommodation parts is sealed with a film, and the like. Also, five holes 21-1, 21-2, 27, 28 and 29 are formed.

A binding buffer is contained in a first accommodation part 22 of the cartridge cover part R1, a first washing buffer is contained in a second accommodation part 23, a second washing buffer is contained in a third accommodation part 24, and a third washing buffer is contained in a fourth accommodation part 25, and an elution buffer is contained in a fifth accommodation part 26.

The PCR plate 200 has a structure in which it is covered with a film made of transparent plastic material (polyethylene, polypropylene, PET, etc.) and a dried PCR primer/probe set or a PCR mixture including the same is contained in each of the reaction wells. Such a structure is the same as the structure as described above in FIG. 8.

Actions of the nucleic acid extraction cartridge according to the present invention may be performed in a defined order as follows.

### 1. Addition of biospecimen

In an automated apparatus as will be described below, the cartridge housing part R2, the cartridge cover part R1, and the PCR plate 200 which are coupled are installed, and a biospecimen (blood) is added through a first hole 21-1 shown in FIG. 14.

### 2. Elution of nucleic acids from cells and binding to bead

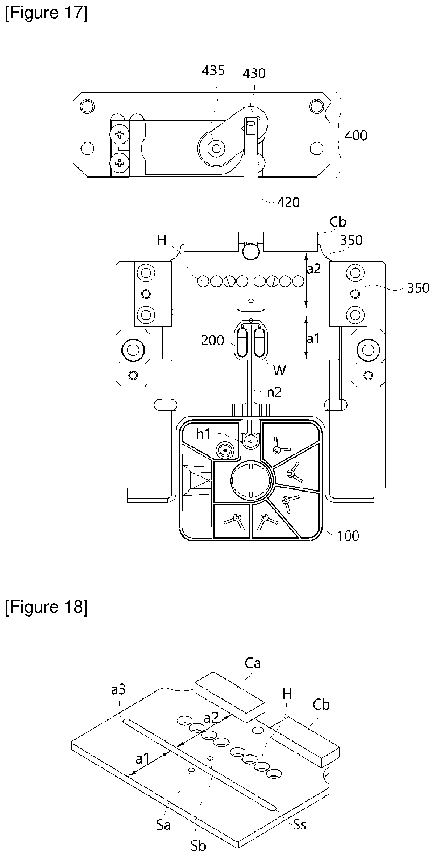

As shown in FIG. 17, a binding buffer in the first accommodation part 22 is introduced into the reaction accommodation part 11 through rotation of the rotary valve 19 disposed at a lower portion of the cartridge housing part R2 and action of the piston part 18 and then mixed with a biospecimen and beads (magnetic beads coated with silica) of a magnetic tablet (MT).

Because the magnetic tablet (MT) used in the present invention is installed at an end part of a through tube extending into the reaction accommodation part 11 of the cartridge body part R2, the magnetic tablet (MT) functions to allow the nucleic acids extracted from cells included in the biospecimen to bind to surfaces of the magnetic beads dispersed after the magnetic tablet is dissolved.

In this case, the magnetic beads may be suspended in a binding buffer instead of the magnetic tablet, and used.

Next, when a sonication tip is introduced into a closed second hole 21-2 of the cartridge body part R2 and ultrasonic waves are applied, the ultrasonic waves are transmitted through plastic to mix the biospecimen, the tablet, and the binding buffer. As a result, the reaction solution is homogenized. In this case, biological tissue included in the biospecimen are pulverized to release nucleic acids, and the released nucleic acids are then bound to surfaces of the beads.

When a magnetic bar is introduced into a third hole 27 of the cartridge body part R2, the beads are fixed to a wall surface of the reaction accommodation part, and the remaining reaction solution is transferred to the first accommodation part through rotation of the rotary valve and an action of the piston.

### 3. Primary washing

A first washing buffer in the second accommodation part 23 is introduced into the reaction accommodation part 11, and mixed with beads to which the nucleic acids are bound through the rotation of the rotary valve of the cartridge body part R2 and an action of the piston as shown in FIG. 16.

Next, the magnetic bar is removed from the third hole 27 shown in FIG. 14, and ultrasonic waves are applied to the sonication tip in the second hole 21-2 to complete the primary washing. Except for the nucleic acids, substances non-specifically bound to the beads are washed away by this primary washing.

The magnetic bar is introduced into the third hole 27 so that the beads are fixed to a wall surface of the reaction accommodation part, and a primary washing solution is transferred to the second accommodation part 23 through the rotation of the rotary valve and an action of the piston.

### 4. Secondary washing

A second washing buffer in the third accommodation part 24 is introduced into the reaction accommodation part 11, and mixed with beads to which the nucleic acids are bound through the rotation of the rotary valve of the cartridge body part R2 and an action of the piston as shown in FIG. 16.

Next, the magnetic bar is removed from the third hole 27 shown in FIG. 14, and ultrasonic waves are applied to the sonication tip in the second hole 21-2 to complete the secondary washing. Except for the nucleic acids, substances non-specifically bound to the beads are washed away by this secondary washing.

The magnetic bar is introduced into the third hole 27 so that the beads are fixed to a wall surface of the reaction accommodation part, and a secondary washing solution is transferred to the third accommodation part 24 through the rotation of the rotary valve and an action of the piston.

### 5. Tertiary washing

A third washing buffer in the fourth accommodation part 25 is introduced into the reaction accommodation part 11, and mixed with beads to which the nucleic acids are bound through the rotation of the rotary valve of the cartridge body part R2 and an action of the piston as shown in FIG. 16.

Next, the magnetic bar is removed from the third hole 27 shown in FIG. 14, and ultrasonic waves are applied to the sonication tip in the second hole 21-2 to complete the tertiary washing. Except for the nucleic acids, substances non-specifically bound to the beads are washed away by this tertiary washing.

The magnetic bar is introduced into the third hole 27 so that the beads are fixed to a wall surface of the reaction accommodation part, and a tertiary washing solution is transferred to the fourth accommodation part 25 through the rotation of the rotary valve and an action of the piston.

### 6. Elution of nucleic acids

An elution buffer in the fifth accommodation part 26 is introduced into the reaction accommodation part 11, and mixed with beads to which the nucleic acids are bound through the rotation of the rotary valve of the cartridge body part R2 and an action of the piston as shown in FIG. 16.

Next, the magnetic bar is removed from the third hole 27 shown in FIG. 14, and ultrasonic waves are applied to the sonication tip in the second hole 21-2 to elute the nucleic acids bound to surfaces of the beads in an elution buffer.

### 7. Preparation of PCR premixture

The magnetic bar is introduced into the third hole 27 so that the beads are fixed to a wall surface of the reaction accommodation part, and an elution buffer in which the nucleic acids are dissolved is introduced into the sixth accommodation part 17 and mixed with PCR materials (a polymerase, a dNTP mix, and the like) contained in the sixth accommodation part using either the rotation of the rotary valve or the action of the piston. Accordingly, the PCR premixture is prepared. The "PCR premixture" used in the present invention is used to define that the premixture includes one or more materials. This process is omitted when the PCR reaction product including the primer/probe set is dried in each of the wells of the PCR plate. In this case, a nucleic acid elution solution is directly injected into the PCR plate, as follows.

### 8. Transfer to PCR plate

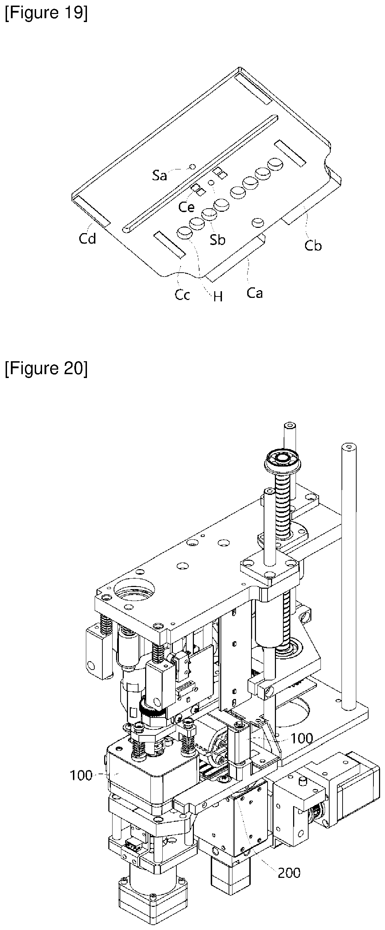

The PCR premixture prepared at the sixth accommodation part is introduced into the PCR plate 200 and mixed with a primer/probe set contained in the PCR plate 200 through the rotation of the rotary valve of the cartridge body part R2 and an action of the piston as shown in FIG. 16. In this introduction process, the PCR premixture moves along a channel Y of the rotary valve as the piston part 18 applies pressure, and is injected through the injection hole h1, as shown in FIG. 19.

Next, a heating bar is introduced into a fourth hole 29 to heat a cover film of the PCR reaction plate inlet under pressure. Accordingly, the PCR reaction plate is sealed.

### 9. PCR reaction

Finally, the nucleic acids extracted from the biospecimen, the polymerase, dNTPs, the primer/probe set, and other buffers are contained in the PCR plate 200.

Therefore, the PCR reaction is carried out by applying heat to the PCR plate 200 in a pressurized manner using the temperature control module of the present invention as described above.

FIGS. 20 to 23 are diagrams showing the entire structures and layout configurations of a device constituting the polymerase chain-reaction system according to the present invention.

As shown in FIG. 20, when the nucleic acid extraction cartridge 100 is installed inside the polymerase chain-reaction system according to the present invention, the aforementioned PCR plate 200 is seated on a lateral surface of the polymerase chain-reaction system. A region corresponding to the body part of the PCR plate 200, in which the reaction wells are present, is exposed to the outside, and the aforementioned temperature control module 300 is disposed above the region.

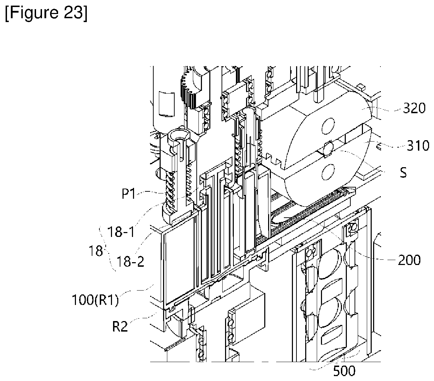

FIG. 21 is an enlarged diagram showing an assembled layout configuration of the main parts of the present invention shown in FIG. 20, and FIG. 22 is a vertical-sectional conceptual view of FIG. 21 presenting a layout of the main parts. FIG. 23 is a lateral perspective cross-sectional conceptual diagram shown in FIG. 22.

As shown in FIGS. 21 to 23, the PCR premixture including the nucleic acids extracted in the nucleic acid extraction cartridge 100 according to the present invention is injected into the PCR plate 200 provided with the reaction wells. Above the PCR plate 200, there is provided the first heating block 310 maintained at a temperature required for thermal denaturation at the heating unit and having the first pressure-applying plane G1 corresponding to a surface of the reaction well. In this case, the second heating block 320, which is coupled to the first heating block 310 and thereby forms a structure that is rotatable around a shaft S so as to switch the region applying pressure, is disposed to face the first heating block 310. Accordingly, the PCR premixture injected into the reaction wells is directly heated by the heating block to correspond to the first temperature (95°C) required for thermal denaturation or the second temperature (55°C) required for annealing.

In addition, as shown in FIGS. 22 and 23, the constant temperature plate 350 is disposed under the PCR plate 200 to maintain the temperature of the PCR plate 200 at a constant temperature level.

The scanning module 500 is disposed under the constant temperature plate 350 so that when light L irradiated by a light irradiation part E1 travels to the PCR plate 200 via the light transmission part H of the constant temperature plate 350, fluorescence is detected.

In an exemplary embodiment of the present invention, as described above, using the temperature control module, it is much easier to control the temperature of the amplified reaction product if the PCR plate 200 is maintained in a certain temperature range when the first heating block having a first temperature (for example, 95°C) is brought into close contact with the PCR plate 200 to raise the temperature or when the second heating block having a second temperature (for example, 55°C) is brought into close contact with the PCR plate 200. Therefore, in order to enhance reaction reliability, it is very important to maintain the temperature of the aforementioned constant temperature plate at the constant second temperature. When the temperature of the PCR plate is raised to 95 °C, the first constant-temperature zone may be brought into close contact with the first temperature block to increase a heat transfer rate. As a result, the temperature of the PCR plate may rapidly reach 95°C in 2 to 3 seconds.

When RT/PCR is carried out to detect an RNA target, a PCR premixture or a PCR plate, which contains a dried RT-PCR reaction product, is used.

The low-temperature heating block is regulated at a RT reaction temperature, brought into close contact with the PCR reaction plate, and maintained for an RT reaction time to perform a reverse transcription reaction. Then, the PCR reaction may be carried out.

The presence or absence of the nucleic acids amplified through the PCR reaction, or a concentration of the amplified nucleic acids may be determined, and this information may be used for diagnosis. In this case, the presence/absence and concentration of the amplified nucleic acids may be determined using a conventional method of detecting a nucleic acid.

For example, a method of using a DNA minor groove-intercalated fluorescence dye 'SYBR green' as a DNA intercalation dye, a method of using a probe to which various fluorophores and quenchers are attached to scan excited light with various wavelength ranges and fluorescence corresponding to the excited light, and the like may be used, but the present invention is not limited thereto.

The present invention has been described in detail with reference to the preferred embodiments thereof. However, it should be understood that the detailed description and specific examples, while indicating preferred embodiments of the invention, are given by way of illustration only, since various changes and modifications within the scope of the invention will become apparent to those skilled in the art from this detailed description.

## Claims

1. A polymerase chain-reaction system comprising:
a nucleic acid extraction cartridge (100) configured to extract nucleic acids from a biospecimen using a nucleic acid extraction reagent as a medium;
a PCR plate (200) coupled in a structure in which the PCR plate 200 is inserted into, and connected via a channel to the nucleic acid extraction cartridge and configured to receive an extracted nucleic acid solution from the nucleic acid extraction cartridge (100) and accommodate the nucleic acid solution into at least one or more reaction wells accommodating a primer or a primer/probe set or a dried PCR mixture comprising the primer/probe set; and
a temperature control module (300) disposed above the PCR plate (200) and comprising a pair of heating blocks (310, 320) disposed adjacent to the reaction well (W) to apply different temperatures to the reaction well (W) and allowing rotational motion and vertical movement.

2. The polymerase chain-reaction system of claim 1, wherein the temperature control module (300) comprises:
a first heating block (310) provided with a first pressurizing surface (G1) corresponding to a surface of the reaction well and maintained at a first temperature required for thermal denaturation;
a second heating block 320 disposed spaced apart from a position corresponding to the first heating block (310), provided with a second pressurizing surface (G2) corresponding to a surface of the reaction well, and maintained at a second temperature required for annealing; and
a drive module (330) configured to implement rotational motion or vertical movement of the first heating block (310) and the second heating block (320).

3. The polymerase chain-reaction system of claim 2, further comprising a cooling fan unit (340) configured to control thermal radiation and conduction between the first heating block (310) and the second heating block 320.

4. The polymerase chain-reaction system of claim 3, wherein the second heating block (320) further comprises a cooling pattern part (321) embodied at a top portion opposing the second pressurizing surface (G2).

5. The polymerase chain-reaction system of claim 3, wherein the first heating block (310) and the second heating block (320) maintain a set temperature at the first temperature or the second temperature using a temperature sensor and a heating unit.

6. The polymerase chain-reaction system of claim 3, wherein the drive module (330) comprises:
a rotary module comprising a drive shaft (S) configured to autonomously rotate the first heating block (310) and the second heating block (320) to shift to either the first pressurizing surface (G1) or the second pressurizing surface (G2) coming into contact with a surface of the reaction well; and
a vertical movement module comprising a drive frame (332) configured to implement a vertical movement of the first heating block (310) and the second heating block (320) in a direction perpendicular to the drive shaft S and a guide frame (334) disposed in a structure in which the guide frame 334 passes through the drive frame.

7. The polymerase chain-reaction system of claim 6, further comprising a first elastic member (333) disposed in a structure in which the first elastic member (333) is inserted into the drive frame so that the drive frame applies a restoring force in an upward direction when the surface of the reaction well comes into contact with the first heating block (310) or the second heating block (320).

8. The polymerase chain-reaction system of claim 7, further comprising a second elastic member (335) which is disposed above the first heating block (310) and the second heating block (320) so that the second elastic member (335) is spaced apart from the first heating block (310) and the second heating block (320), and having holes provided at both ends thereof, the holes having a larger diameter than that of the guide frame, allows vertical movement of the drive frame while preventing deviation from the guide frame by means of a pin provided in the guide frame after the holes are inserted into a pair of guide frames (334) and applies a buffering force during the contact of the surface of the reaction well while applying a pressure in a downward direction.

9. A polymerase chain-reaction system comprising:
a temperature control module (300) comprising a pair of heating blocks (310, 320) configured to receive a nucleic acid solution and allow rotational motion and vertical movement so that first and second temperatures, which are different, are applied to the top portion of the PCR plate (200) accommodating a primer or a primer/probe set or a dried PCR mixture comprising the primer/probe set; and
a constant temperature plate (350) disposed under the PCR plate (200) so that the temperature of the PCR plate (200) is maintained at the first temperature or the second temperature.

10. The polymerase chain-reaction system of claim 9, wherein the constant temperature plate (350) comprises a first zone heated to the first temperature and a second zone spaced apart from the first zone and heated to the second temperature, and further comprises a horizontal movement drive module configured to horizontally move the constant temperature plate (350) to the bottom of the PCR plate (200).

11. The polymerase chain-reaction system of claim 10, wherein the constant temperature plate (350) is provided with a separation portion (Ss) configured to partition the first zone and the second zone, and has a structure in which the first zone and the second zone are connected at both lateral ends of the separation portion (Ss).

12. The polymerase chain-reaction system of claim 10, wherein the constant temperature plate (350) is configured so that a circuit of a temperature sensor and a heating element is formed on a PCB substrate and the heating element and the temperature sensor are closely attached to metal plates corresponding to the first zone and the second zone, respectively.

13. The polymerase chain-reaction system of claim 10, wherein the horizontal movement motion of the constant temperature plate (350) is implemented in a sliding manner,
wherein the constant temperature plate (350) moves in a state in which the constant temperature plate (350) comes into contact with a sliding tape coming into contact with a lateral portion of the constant temperature plate (350).

14. The polymerase chain-reaction system of claim 10, wherein, when the first zone horizontally moves and is disposed under the PCR plate, the first heating block is operated to rotate to face a top surface of the PCR plate, and
when the second zone horizontally moves and is disposed under the PCR plate, the second heating block is operated to rotate to face a top surface of the PCR plate.

15. The polymerase chain-reaction system of claim 14, wherein, when temperature cycling is performed on the PCR plate (200),
in order to increase the temperature of the PCR plate to the first temperature, the first heating block rotates to face a top surface of the PCR plate, and a bottom surface of the PCR plate is pressurized while coming into contact with the first heating block as the first heating block moves downwards after horizontal movement of the first zone of the constant temperature plate, and
in order to decrease the temperature of the PCR plate to the second temperature, the top surface of the PCR plate (200) rotates to face the second heating block, and the bottom surface of the PCR plate (200) is pressurized while coming into contact with the second heating block as the second heating block moves downwards after horizontal movement of the second zone of the constant temperature plate,
so that the top and bottom surfaces of the PCR plate (200) are heated and cooled at the same time.

16. The polymerase chain-reaction system of claim 10, wherein the constant temperature plate (350) further comprises a temperature sensor part (351) comprising temperature sensors (T1) and (T2) configured to sense a temperature of the constant temperature plate in at least one or more locations; and a control module (Cp) configured to control a change in the set temperature.

17. The polymerase chain-reaction system of claim 10, comprising a scanning module (500) disposed under the PCR plate (200) to scan excited light with various wavelength ranges and fluorescence corresponding to the excited light in order to determine a concentration of a reaction product amplified in the reaction well (W), and
a plurality of light transmission parts (H) provided in a through hole structure and configured to guide detection light of the scanning module (500) toward the constant temperature plate (350).
